# FASCICULE DE BREVET EUROPEEN

(11) **EP 0 670 359 B1**
(45) Date de publication et mention de la délivrance du brevet: **17.05.2000**
(21) Numéro de dépôt: 95400397.6
(22) Date de dépôt: 24.02.1995
(51) Int. Cl.: C09K 7/02, E21B 43/22, E21B 43/25

(54) **Utilisation de dérivés cellulosiques modifiés hydrophobiquement comme réducteur de filtrat**
Verwendung von hydrophobisch-modifizierten Zellulosederivaten als Flüssigkeitverlustverringen
Use of hydrophobically modified cellulose derivatives as fluid loss reducer

(30) Priorité: 03.03.1994 FR 9402572
(43) Date de publication de la demande: 06.09.1995
(73) Titulaire: INSTITUT FRANCAIS DU PETROLE, 92502 Rueil-Malmaison (FR); SOFITECH N.V., 2030 Antwerpen (BE)
(72) Inventeur: Audibert, Annie, F-78110 Le Vesinet (FR); Argillier, Jean-François, F-92150 Suresnes (FR); Bailey, Louise, Comberton, Cambridge CB3 7EQ (GB); Reid, Paul I., Cambridgeshire PE19 3RJ (GB)

(56) Documents cités:
- EP-A- 0 314 118
- EP-A- 0 465 992
- US-A- 4 529 523
- DATABASE WPI Derwent Publications Ltd., London, GB; AN 83-787503 & SU-A-979 483 (DZHIENBAEV) 7 Décembre 1982

## Description

La présente invention concerne des opérations menées dans le but d'exploiter des gisements sousterrains contenant des hydrocarbures. Plus particulièrement, l'invention décrit l'utilisation d'une quantité déterminée d'au moins un dérivé cellulosique modifié hydrophobiquement dans un fluide de forage à base d'eau en circulation dans un puits foré à travers au moins une formation géologique ayant une certaine perméabilité, en tant que réducteur de filtrat.

Les techniques conventionnelles de forage de puits, de conditionnement ou d'intervention dans ces puits comportent la circulation d'un fluide injecté vers le fond du puits par le canal d'un train de tubes composant la garniture de forage ou la garniture de production, le fluide remontant en direction de la surface dans l'annulaire défini par les parois du puits et l'extérieur de la garniture de tubes. Au cours de la remontée, une certaine quantité de fluide pénètre dans les formations géologiques poreuses ou fracturées. Cette quantité perdue de fluide est appelée perte par filtration ou filtrat. Il est généralement souhaitable de limiter la quantité de filtrat car celle-ci représente une consommation coûteuse de produits, des opérations de conditionnements supplémentaires dans l'installation de traitement des boues, et également des risques de déstabilisation des parois du puits ou de colmatage des zones géologiques productrices ou potentiellement productrices.

On connait dans la profession de nombreux produits réducteurs de filtrat pour les fluides à base d'eau, qu'ils soient fluides de forage, fluides de conditionnement communément appelés fluides de "completion" ou fluides d'intervention dans un puits communément appelés fluide de "work over". On peut citer par exemple, l'utilisation de colloïdes organiques tels amidon ou CMC (carboxyméthylcellulose). On connait par le document US-4784693 l'utilisation d'un polymère HMHEC ou hydroxyethyl cellulose modifiée hydrophobiquement comme réducteur de filtrat pour un laitier de cimentation d'une colonne de tube dans un puits. Cependant, compte tenu de la destination spécifique et de la composition d'un laitier de ciment, son comportement et ses caractéristiques physiques ou rhéologiques sont différentes de ceux d'un fluide, par exemple un fluide de forage, de "completion" ou d'intervention. En effet, la teneur en eau, la composition, la salinité et le rapport solide-liquide d'un laitier de ciment sont notamment adaptés à un fluide qui doit solidifier dans le puits. Au contraire, un fluide tel un fluide de forage, de completion ou de workover est adapté à être injecté vers le fond d'un puits à partir d'une installation de pompage de surface, puis soit remonter en surface pour y être traité et/ou contrôlé avant éventuellement un nouveau cycle d'injection, soit rester dans le puits mais en conservant sensiblement les mêmes caractéristiques physico-chimiques qu'à l'origine.

Ainsi, la présente invention concerne l'utilisation d'une quantité déterminée d'au moins un dérivé cellulosique modifié hydrophobiquement dans un fluide de forage en circulation dans un puits foré à travers au moins une formation géologique ayant une certaine perméabilité en tant que réducteur de filtrat. Dans une variante, le dérivé cellulosique est de la cellulose hydroxy éthylée modifiée hydrophobiquement.

La cellulose hydroxy éthylée modifiée peut comporter un radical alkyl hydrophobe comportant entre 4 et 25 atomes de carbone, et préférentiellement entre 8 et 18.

La masse moléculaire de la cellulose hydroxy éthylée modifiée peut être inférieure à 2000000 daltons et préférentiellement comprise entre 20000 et 500000 daltons.

Le fluide peut comporter entre 1 et 30 grammes par litre de cellulose hydroxy éthylée modifiée hydrophobiquement et préférentiellement entre 1 et 15 g/l.

Le fluide peut comporter au moins un polymère choisi dans le groupe constitué par le xanthane, le scléroglucane, le wellane, la cellulose hydroxy éthylée (HEC), la CMC, la gomme de Guar et les polyacrylamides.

La viscosité du fluide peut être principalement contrôlée par l'adjonction d'au moins un polymère choisi dans le groupe constitué par le xanthane, le scléroglucane, le wellane, la cellulose hydroxy éthylée (HEC), la CMC, la gomme de Guar et les polyacrylamides.

Le fluide peut comporter au moins un électrolyte à des concentrations pouvant atteindre la saturation.

L'électrolyte peut être choisi dans le groupe constitué par le chlorure, le bromure, le carbonate, l'acétate, le formiate, de sodium, de potassium, de calcium, de magnesium et de zinc dans la mesure où ils constituent des sels solubles.

Le fluide peut comporter entre 0,5 et 30 g/l de HM HEC et entre 0,5 et 20 g/l de polymère viscosifiant.

Le fluide peut comporter entre 0,5 et 10 g/l de HM HEC, entre 2 et 4 g/l de polymère viscosifiant, préférentiellement du xanthane, entre 10 et 100 g/l de KCl ou de NaCl et entre 0 et 30 g/l d'argile réactive.

Les dérivés cellulosiques modifiés hydrophobiquement découlent principalement des dérivés cellulosiques classiquement utilisés commme la carboxy méthyl cellulose (CMC), la cellulose hydroxy éthylée (HEC) ou l'hydroxy propyl cellulose (HPC). Ces dérivés peuvent être modifiés chimiquement par l'incorporation de groupements alkyls par réaction chimique affectant certains motifs cellulosiques. Ces dérivés cellulosiques modifiés hydrophobiquement, notamment HM HEC, HM CMC, HM HPC sont décrits dans le document EP-A1-465992.

Le polymère HM HEC ou cellulose hydroxy éthylée modifiée hydrophobiquement a été décrit dans le document US-A-4228277 ainsi que dans la publication "Synthesis and solution properties of hydrophobically modified hydroxyethyl cellulose" de A.C. SAU et L.M. LANDOLL, dans "Polymers in aqueous media : performance through association", J.E. Glass (Ed), Adv. Chem Ser. 213, ACS Wash. 1989.

La HM HEC, non ionique et hydrosoluble peut être préparée à partir de la HEC ou cellulose hydroxy éthylée, par incorporation chimique d'une longue chaîne alkyle entre C₄ et C₂₅, de préférence entre 8 et 18 atomes de carbone pour le motif hydrophobe.

Le motif hydrophobe est lié à la cellulose par une liaison éther ou ester, préférablement éther car ce type de liaison est plus stable lorsque le polymère est en solution aqueuse.

Le taux de motifs hydrophobes peut varier de 0,2 à environ 5%, de préférence entre 0,2 et 1,5% et plus particulièrement entre 0,2 et 1%.

Le polymère HM HEC peut avoir un taux de substitution molaire de motif hydroxy éthyle d'au moins 1,5, de préférence entre 1,5 et 4, c'est-à-dire de 1,5 à 4 moles de substituants hydroxy éthylés par motif anhydroglucose, et une masse moléculaire relativement faible, c'est-à-dire inférieure à 2000000 daltons et de préférence entre 20000 et 500000 (soit un degré de polymérisation de 75 à 1800).

La demanderesse a mis en évidence que le polymère HM HEC, défini plus haut, a de bonnes qualités pour contrôler la filtration d'un fluide de forage, de "completion" ou de "work-over", fluides dont la phase liquide continue est aqueuse. Le fluide en circulation ou mis en place par circulation dans le puits peut comporter des produits viscosifiants à base d'argiles réactives et/ou de polymères de nature spécifique pour réaliser notamment la fonction de viscosifiant.

Un fluide de "completion" ou fluide de conditionnement d'un puits, est un fluide déplacé dans un puits pour être mis en place dans un puits de production. Au cours de son déplacement ou de sa mise en place ce fluide est en contact pendant une durée plus ou moins longue avec la formation géologique productrice ou potentiellement productrice. Il en est de même pour un fluide d'intervention ou dit de "workover".

Les caractéristiques physiques et/ou chimiques de ces fluides sont contrôlées et ajustées en fonction de la nature de la formation géologique et des effluents présents, des conditions de fond et des différents rôles que peuvent réaliser de tels fluides, par exemple de nettoyage, de stabilisation, de contrôle des pressions, etc...De plus, ces fluides doivent autant que possible ne pas modifier la productivité de la couche géologique productrice. Aussi, il sera préféré que ces types de fluides contiennent peu ou pas de solides, bien que dans certains cas la présence de solides réactifs ou inertes soit inévitable. Dans tous les cas, le contrôle de la filtration est un paramètre très important.

Les fluides selon la présente invention peuvent également être mis en place ou déplacés dans le puits sous forme de "spacer" ou volume de fluide déplacé par un autre fluide de composition différente, ou intercalé entre deux autres fluides.

Une variante de l'invention concerne les fluides pour les forages dits "slim-hole" (petit diamètre de forage) ou les forages fortement déviés. Ces fluides pour les applications précitées sont préférentiellement déterminés pour posséder les caractéristiques suivantes :
- avoir une viscosité faible aux forts taux de cisaillement, afin de réduire les pertes de charge,
- former un gel au repos pour maintenir les déblais en suspension lors des arrêts de circulation,
- contenir une teneur maximale en solides qui peuvent avoir tendance à former des dépots ou des amalgames notamment sous l'action de la centrifugation provoquée par la rotation du train de tiges dans un trou de faible diamètre relativement à la dimension du train de tiges, ou sous l'action de la gravité dans le cas des puits horizontaux. Or, sans solide ou avec très peu de solides par rapport aux forages conventionnels, il est connu que le contrôle de la filtration est très délicat.

Donc, les fluides en circulation dans de telles conditions particulières ne comportent généralement pratiquement pas de colloïdes argileux réactifs comme viscosifiant de base mais des polymères spécifiques. Il est connu que ces fluides dits "sans solide" ou "sans apport de solide" présentent des difficultés pour avoir de bonnes caractéristiques de filtration, particulièrement aux moyennes ou hautes températures, avec les produits conventionnels de réduction du filtrat. Par contre, la HM HEC utilisée selon une variante de la présente invention révèle de bonne capacité pour contrôler la filtration, en particulier en combinaison avec certains des polymères viscosifiants.

Compte tenu des similitudes de structures entre la HM HEC et la HM CMC, il découle que le comportement de la HM CMC est proche de celui de la HM HEC, notamment dans sa capacité de contrôle de filtrat. Il en est de même pour les autres dérivés cellulosiques modifiés hydrophobiquement.

Les essais suivants vont mettre en évidence les caractéristiques du HM HEC dans diverses conditions d'utilisations et selon des procédures de tests conventionnels. Le polymère testé est un des produits actuellement disponibles sur le marché pour des applications différentes, notamment cosmétologiques et dont la masse moléculaire est estimée entre 200000 et 800000. Les tests de filtration ont été exécutés selon les normes API (American Petroleum Institute) en vigueur : API RP23 B1 section 3- Filtration-Juin 1990. Les filtrats sont donnés en millilitre (ml), la viscosité plastique VP en mPa.s, la contrainte seuil YV (Yield Value) en lb/100ft² (on multipliera par 0,4788 pour obtenir YV en Pa) et l'épaisseur du cake en millimètre.

Différentes formulations de fluides ont été testées, avec ou sans ajout d'alourdissants de type baryte, le viscosifiant est en général un polysaccharide du type xanthane ou scléroglucane.

Les formulations selon l'invention ont été comparées à des formulations classiques contenant des réducteurs de filtrat connus dans la profession, tels la CMC (carboxy méthyl cellulose) basse viscosité qui peut être actuellement considérée comme un des meilleurs produits disponibles avec, pour certaines applications, la HEC (cellulose hydroxy éthylée) ou le PAC (cellulose polyanionique) de masse moléculaire plus élevée que celle de la CMC.

### Essai 1 :

### Comparaison de l'efficacité du HM HEC avec des réducteurs de filtrat classiques

Conditions : Standard API, température ambiante (30°C).

Formulation de base FB : Xanthane 4 g/l, KCl 50 g/l

| **Additif à FB** | **Filtrat 30 min** | **VP** | **YV** | **Cake** |
|---|---|---|---|---|
| --- | 24 | | | |
| **CMC basse vis. 10 g/l** | 20 | 13 | 8 | <1 |
| **HEC 4 g/l** | 35 | | | |
| **HM HEC 4 g/l** | 19 | 18 | 18 | <1 |

Le xanthane de marque IDVIS, la CMC basse viscosité, le HEC utilisés sont respectivement commercialisés par les sociétés IDF et Aqualon.

### Remarques :

Les caractéristiques de filtration en présence de HM HEC sont au moins supérieures à la CMC low vis. qui est actuellement considéré comme un des meilleurs produits disponibles.

### Essai 2 :

### Influence de la densité de la formulation

| **Formulation** | Xanthane 4 g/l KCl 50 g/l HM HEC 4 g/l d=1,05 | Xanthane 4 g/l KCl 50 g/l HM HEC 4 g/l Baryte pour d=1,64 |
|---|---|---|
| **Filtrat 30 min** | 19 | 8 |
| **VP** | 18 | 19 |
| **YV** | 18 | 28 |
| **Epaisseur du cake (mm)** | <1 | 2 |

### Remarques :

L'ajout de baryte à la formulation étudiée précédemment permet d'augmenter la densité du fluide à 1,64. Le filtrat 30' est alors faible (8 ml). Comparativement, une formulation à base de CMC (Essai 3) donne également un filtrat faible (3,2 ml) mais avec une forte viscosité plastique (36).

### Essai 3 :

### Comparaison de l'efficacité du HM HEC avec des réducteurs de filtrat classiques, pour un fluide de densité 1,64

Conditions : Standard API, température ambiante (30°C).

Formulation de base FB : Xanthane 4 g/l, KCl 50 g/l, baryte pour d=1,64

| **Additif à FB** | **Filtrat 30 min** | **VP** | **YV** |
|---|---|---|---|
| | 32 | 28 | 6 |
| **CMC basse vis. 10 g/l** | 3,2 | 36 | 11 |
| **HM HEC 4 g/l** | 8,2 | 19 | 28 |

### Essai 4 :

### Comparaison de l'efficacité du HM HEC avec des réducteurs de filtrat classiques

Conditions : Standard API, température ambiante (30°C).

| **Formulation** | Xanthane 4 g/l KCl 50 g/l HM HEC 4 g/l Baryte pour d=1,64 | Scléro. 1 g/l K₂CO₃ 250 g/l PAC 5 g/l Baryte pour d=1,64 |
|---|---|---|
| **Filtrat 30 min** | 8 | 11,5 |
| **VP** | 19 | |
| **YV** | 28 | |
| **Epaisseur du cake (mm)** | 2 | |

| **Formulation** | Xanthane 3 g/l CaCl₂ 210 g/l HM HEC 3 g/l d=1,2 | Xanthane 3 g/l K₂CO₃ 250 g/l CMC LV 7 g/l d=1,2 |
|---|---|---|
| **Filtrat 30 min** | 12 | 31 |
| **VP** | 24 | 34 |
| **YV** | 14 | 11 |
| **Epaisseur du cake (mm)** | <1 | |

| **Formulation** | Xanthane 3 g/l CaCl₂ 750 g/l PAC 7 g/l d=1,5 | Xanthane 3 g/l CMC HV 7 g/l (Haute Visco) d=1,2 |
|---|---|---|
| **Filtrat 30 min** | 17 | 3 |
| **VP** | 110 | 110 |
| **YV** | 40 | 70 |
| **Epaisseur du cake (mm)** | <2 | |

### Remarques :

On notera que les produits de type PAC ou CMC HV entrainent de faibles volumes de filtrat mais de fortes augmentations de viscosité. Ceci n'est pas le cas pour la HM HEC.

### Essai 5 :

### Influence de la température (50°C)

Conditions : Standard API, dans une cellule de test HP/HT avec une pression de 35 bar et une contre-pression de 15 bar.

Formulation de base FB : Xanthane 4 g/l, KCl 50 g/l, et HM HEC 4 g/l

| | **Température 30°C** | **Température 50°C, après vieillissement 24 h à 50°C** |
|---|---|---|
| **Filtrat 30 min** | 19 | 15 |
| **VP** | 18 | |
| **YV** | 18 | |
| **Epaisseur du cake (mm)** | | |

### Remarques :

L'augmentation de la température entraine généralement un renforcement des interactions hydrophobes. Sous l'effet de la température, on observe une meilleure réduction du filtrat de la HM HEC. Ceci est confirmé par l'essai 6.

### Essai 6 :

### Influence de la température (120°C)

Conditions : Dans une cellule de test HP/HT avec une pression de 35 bar et une contre-pression de 15 bar, mais avec une température de filtration de 120°C.

Formulation de base FB : Xanthane 4 g/l, KCl 50 g/l

| **Additif à FB** | **Filtrat 30 min** | **VP** | **YV** | **Cake** |
|---|---|---|---|---|
| **CMC low vis. 10 g/l** | 12,8 | 13 | 8 | 1 |
| **HM HEC 4 g/l** | 12 | 18 | 18 | 1 |

### Essai 7 :

### Formulations avec solides

Conditions : Standard API, température de 30°C.

Formulation de base FB : Argile Green Bond 30 g/l, NaCl 10 g/l

| **Additif à FB** | **Filtrat 30 min** | **VP** | **YV** | **Cake** |
|---|---|---|---|---|
| **1) Xanthane 4 g/l et HM HEC 3 g/l** | 11 | 19 | 30 | 1 |
| **2) Xanthane 2 g/l et HM HEC 1 g/l** | 14 | 22 | 38 | 2 |

### Remarques :

Une certaine quantité d'argile peut être utilisée en association, par exemple avec du xanthane. Le niveau de filtrat obtenu reste faible.

Les différents essais de la présente description confirment donc que les formulations de fluide adaptés au forage, au conditionnement de puits ou d'intervention, contenant préférentiellement un polymère viscosifiant en solution aqueuse, éventuellement des particules solides réactives et/ou inertes, peuvent avoir une bonne caractéristique de filtration en utilisant une quantité efficace de HM HEC comme réducteur de filtrat. On sait que les polymères réducteurs de filtrat, telles la CMC ou la HEC, dispersent et homogénéisent la suspension par adsorption sur les particules solides, les rendant ainsi plus négatives et donc plus répulsives. Il se forme ensuite par filtration de cette suspension homogène un cake ayant une structure assez régulière et par conséquent relativement imperméable. De plus, la perméabilité du cake peut être encore diminuée par du polymère libre qui gélifie dans les pores du cake.

Le polymère HM HEC joue notamment un tel rôle ou un rôle équivalent. Mais la structure particulière de la HM HEC de la présente invention est aussi susceptible de former une structure tridimensionnelle ordonnée sans nécessiter, pour former un cake de faible perméabilité, d'avoir un support de particules solides comme de l'argile ou de la baryte. La stabilité en température de la structure de la HM HEC permet son application dans les domaines d'intérêt de la profession. Les avantages et les fonctions de la HM HEC se retrouvent dans les polymères de cette classe pour des masses moléculaires inférieures à environ 2000000 daltons.

Dans le cadre d'applications spécifiques dans lesquelles les fluides ne contiennent pratiquement pas de solides réactif, par exemple les applications "slim hole" ou forage dévié, fluides de "completion" ou de "workover", l'association du HM HEC comme réducteur de filtrat associé à un polymère viscosifiant, par exemple le xanthane, donne aux fluides de bonnes caractéristiques de filtration même à des hautes températures.

## Revendications

1. Utilisation d'une quantité déterminée d'au moins un dérivé cellulosique modifié hydrophobiquement dans un fluide de forage à base d'eau en circulation dans un puits foré à travers au moins une formation géologique ayant une certaine perméabilité, en tant que réducteur de filtrat.

2. Utilisation selon la revendication 1, dans laquelle ledit dérivé cellulosique est de la cellulose hydroxy éthylée modifiée hydrophobiquement.

3. Utilisation selon la revendication 2, dans laquelle la cellulose hydroxy éthylée modifiée comporte un radical alkyl hydrophobe comportant entre 4 et 25 atomes de carbone, et préférentiellement entre 8 et 18.

4. Utilisation selon l'une des revendications 2 ou 3, dans laquelle la masse moléculaire de la cellulose hydroxy éthylée modifiée est inférieure à 2000000 daltons et préférentiellement comprise entre 20000 et 500000 daltons.

5. Utilisation selon l'une des revendications 2 à 4, dans laquelle ledit fluide comporte entre 1 et 30 grammes par litre de cellulose hydroxy éthylée modifiée hydrophobiquement et préférentiellement entre 1 et 15 g/l.

6. Utilisation selon l'une des revendications 1 à 5, dans laquelle ledit fluide comporte au moins un polymère choisi dans le groupe constitué par le xanthane, le scléroglucane, le wellane, la cellulose hydroxy éthylée (HEC), la carboxymethylcellulose (CMC), la gomme de Guar et les polyacrylamides.

7. Utilisation selon l'une des revendications précédentes, dans laquelle ledit fluide est un fluide essentiellement sans solide, c'est à dire sans apport de solides argileux réactifs.

8. Utilisation selon la revendication 7, dans laquelle ledit fluide comporte entre 0,5 et 30 g/1 de HM HEC et entre 0,5 et 20 g/1 de polymère viscosifiant.

9. Utilisation selon la revendication 8, dans laquelle ledit fluide comporte entre 0,5 et 10 g/1 de HM HEC, entre 2 et 4 g/l de polymère viscosifiant, préférentiellement du xanthane, entre 10 et 100 g/l de KCl ou de NaCl.

10. Utilisation selon l'une des revendications 8 ou 9, constitué principalement d'au moins un électrolyte à des concentrations pouvant atteindre la saturation.

11. Utilisation selon la revendication 10, dans laquelle ledit électrolyte est choisi dans le groupe constitué par le sodium, le potassium, le calcium, le magnésium, le chlorure, le bromure, le zinc, le carbonate, l'acétate et le formiate.

## Patentansprüche

1. Verwendung einer vorgegebenen Menge mindestens eines hydrophob modifizierten Cellulosederivats in einer Bohrflüssigkeit auf Wasserbasis, die in einem durch mindestens eine geologische Formation, die eine bestimmte Permeabilität aufweist, gebohrten Bohrloch zirkuliert, als Filtrat-Reduktionsmittel.

2. Verwendung nach Anspruch 1, bei der das genannte Cellulosederivat hydrophob modifizierte Hydroxyethylcellulose ist.

3. Verwendung nach Anspruch 2, bei der die modifizierte Hydroxyethylcellulose einen hydrophoben Alkylrest mit 4 bis 25, vorzugsweise 8 bis 18 Kohlenstoffatomen aufweist.

4. Verwendung nach einem der Ansprüche 2 oder 3, bei der die Molekularmasse der modifizierten Hydroxyethylcellulose unter 2 000 000 Dalton, vorzugsweise zwischen 20 000 und 500 000 Dalton, liegt.

5. Verwendung nach einem der Ansprüche 2 bis 4, bei der die genannte Flüssigkeit 1 bis 30, vorzugsweise 1 bis 15 g/l hydrophob modifizierte Hydroxyethylcellulose enthält.

6. Verwendung nach einem der Ansprüche 1 bis 5, bei der die genannte Flüssigkeit mindestens ein Polymer, ausgewählt aus der Gruppe, die besteht aus Xanthan, Scleroglucan, Wellan, Hydroxyethylcellulose (HEC), Carboxymethylcellulose (CMC), Guargummi und Polyacrylamiden, enthält.

7. Verwendung nach einem der vorhergehenden Ansprüche, bei der die genannte Flüssigkeit eine im wesentlichen feststofffreie Flüssigkeit, d.h. eine Flüssigkeit ohne Zusatz von reaktionsfähigen Tonfeststoffen, ist.

8. Verwendung nach Anspruch 7, bei der die genannte Flüssigkeit 0,5 bis 30 g/l HM HEC und 0,5 bis 20 g/l viskos machendes Polymer enthält.

9. Verwendung nach Anspruch 8, bei der die genannte Flüssigkeit 0,5 bis 10 g/l HM HEC, 2 bis 4 g/l viskos machendes Polymer, vorzugsweise Xanthan, und 10 bis 100 g/l KCl oder NaCl enthält.

10. Verwendung nach einem der Ansprüche 8 oder 9, bei der die Flüssigkeit hauptsächlich aus mindestens einem Elektrolyten in Konzentrationen, welche die Sättigung erreichen können, besteht.

11. Verwendung nach Anspruch 10, bei der der genannte Elektrolyt ausgewählt wird aus der Gruppe, die besteht aus Natrium, Kalium, Calcium, Magnesium, Chlorid, Bromid, Zink, Carbonat, Acetat und Formiat.

## Claims

1. Use of a predetermined quantity of at least one hydrophobically modified cellulose derivative in a water-based drilling fluid in circulation in a well drilled through at least one geological formation having a certain permeability as a filtrate reducer.

2. Use according to claim 1, in which said cellulose derivative is hydrophobically modified hydroxyethylcellulose.

3. Use according to claim 2, in which the modified hydroxyethylcellulose comprises a hydrophobic alkyl radical comprising between 4 and 25 atoms of carbon, and preferably between 8 and 18.

4. Use according to one of claims 2 or 3, in which the molecular mass of the modified hydroxyethylcellulose is less than 2,000,000 daltons and preferably between 20,000 and 500,000 daltons.

5. Use according to one of claims 2 to 4, in which said fluid comprises between 1 and 30 grams per litre of hydrophobically modified hydroxyethylcellulose and preferably between 1 and 15 g/l.

6. Use according to one of claims 1 to 5, in which said fluid comprises at least one polymer selected from the group constituted by xanthan, scleroglucan, wellan, hydroxyethylcellulose (HEC), carboxymethylcellulose (CMC), guar gum and the polyacrylamides.

7. Use according to one of the preceding claims, in which said fluid is a fluid essentially without solids, i.e. without added reactive clay solids.

8. Use according to claim 7, in which said fluid comprises between 0.5 and 30 g/l of HM HEC and between 0.5 and 20 g/l of viscosifying polymer.

9. Use according to claim 8, in which said fluid comprises between 0.5 and 10 g/l of HM HEC, between 2 and 4 g/l of viscosifying polymer, preferably xanthan, between 10 and 100 g/l of KCl or of NaCl.

10. Use according to one of claims 8 or 9, constituted principally by at least one electrolyte at concentrations which can reach saturation.

11. Use according to claim 10, in which said electrolyte is selected from the group constituted by sodium, potassium, calcium, magnesium, chloride, bromide, zinc, carbonate, acetate and formiate.
